# EUROPEAN PATENT APPLICATION

(11) **EP 3 301 685 A1**
(43) Date of publication of application: **04.04.2018**
(21) Application number: 16850822.4
(22) Date of filing: 15.07.2016
(51) Int. Cl.: G21F 9/30, G21C 19/02

(54) **METHOD FOR DECOMMISSIONING NUCLEAR POWER PLANT**

(30) Priority: 02.10.2015 JP 2015196789
(71) Applicant: Mitsubishi Heavy Industries, Ltd., Tokyo 108-8215 (JP)
(72) Inventor: OKAMOTO, Tomohisa, Tokyo 108-8215 (JP); KOMURO, Toshiya, Tokyo 108-8215 (JP); KUROKAWA, Noboru, Tokyo 108-8215 (JP); UMAKOSHI, Toshimitsu, Tokyo 108-8215 (JP)
(74) Representative: Cabinet Beau de Loménie
(86) International application number: PCT/JP2016/070966
(87) International publication number: WO 2017/056645

(57) **Abstract**

A method for decommission of a nuclear power plant includes: a step of removing fuel from a reactor vessel and storing the fuel in a fuel storage pool; a step of carrying the fuel out from the fuel storage pool; a step of, after removing the fuel from the reactor vessel, taking a reactor internal structure inside the reactor vessel out to a work pool storing water and being positioned above the reactor vessel, and decommissioning the reactor internal structure under the water stored in the work pool; a step of carrying the decommissioned reactor internal structure out from the work pool; and a step of, after carrying the reactor internal structure out from the work pool, draining the water from the work pool. The step of taking out and decommissioning the reactor internal structure is started before completion of carrying out of the fuel from the fuel storage pool.

## Description

### TECHNICAL FIELD

The present disclosure relates to a method for decommissioning a nuclear power plant which is to be abandoned, for instance.

### BACKGROUND ART

Generally, for a nuclear power plant which is to be abandoned, a schedule is provided, including a plurality of steps such as decommissioning steps of decommissioning apparatuses and buildings, and a discharge step of carrying out expended fuel.

Unlike other type of plants, a nuclear power plant contains radioactive waste. Thus, when performing a decommissioning step in a reactor region, apparatuses to be decommissioned are transferred to a pool installed near the reactor, and then the apparatuses are decommissioned under water. For instance, Patent Document 1 discloses performing a decommission work for a rector inside a pool installed near the reactor through remote control, using a decommission manipulator.

Furthermore, in an abandonment procedure of a nuclear power plant, it is required to store and reserve radioactive waste safely. Thus, the schedule also includes a step of building a storage facility for temporal and safe storage of expended fuel and radioactive waste such as structural bodies inside a reactor. In such a schedule, the radioactive waste and expended fuel stored temporarily in the storage facility are transferred to a radioactive-matter disposal site constructed in a remote area from the nuclear power plant, and buried at the site.

### Citation List

### Patent Literature

Patent Document 1: JPH8-075892A

### SUMMARY

### Problems to be Solved

However, disposal sites for radioactive matters are not yet constructed, and storage standards for high-dose waste are not yet provided. In the current situation, expended fuel and radioactive waste have not been carried out from a nuclear power plant after abandonment. Thus, it is necessary to continue temporal storage of waste after apparatuses in a reactor region are decommissioned. Therefore, to retard production of high dose waste, in a normal schedule, turbine buildings with little radioactive matters and peripheral apparatuses that can be easily handled, generators for instance, are decommissioned first, and the decommission step of apparatuses in a reactor region is set in the latter stage of the schedule.

As described above, in a typical abandonment procedure of a nuclear power plant, decommission of apparatuses in a reactor region is simply delayed to address the difficult handling of radioactive waste, sacrificing the efficiency and costs.

In view of the above, an object of at least some embodiments of the present invention is to provide a method for decommission of a nuclear power plant, which is capable of considerably reducing costs required for decommission, without decreasing the efficiency of decommission works for the nuclear power plant.

### Solution to the Problems

(1) A method for decommission of a nuclear power plant according to at least some embodiments of the present invention comprises: a step of removing fuel from a reactor vessel and storing the fuel in a fuel storage pool; a step of carrying the fuel out from the fuel storage pool; a step of, after removing the fuel from the reactor vessel, taking a reactor internal structure inside the reactor vessel out to a work pool storing water and being positioned above the reactor vessel, and decommissioning the reactor internal structure under the water stored in the work pool; a step of carrying the decommissioned reactor internal structure out from the work pool; and a step of, after carrying the reactor internal structure out from the work pool, draining the water from the work pool. The step of taking out and decommissioning the reactor internal structure is started before completion of carrying out of the fuel from the fuel storage pool.
   The present inventors studied the schedule related to the abandonment procedure in terms of efficiency and costs, and found that filling the work pool with water for a long period of time leads to an increase in the costs. For instance, the water filling equipment such as a pump for supplying the work pool with water may require maintenance costs of the order of one hundred million yen per year. Thus, if decommission of the reactor internal structure is delayed due to the problem of disposal sites for radiative matters and the work pool is continuously filled with water, the costs for the abandonment procedure builds up considerably.
   In view of this, in the above method for decommission of a nuclear power plant, removal and decommissioning work for the reactor internal structure is started before completing removal of the fuel from the fuel storage pool. By performing the step of decommissioning the reactor internal structure in a relatively early stage of the schedule, it is possible to drain the water from the work pool in an early stage. By draining the water from the work pool in an early stage, it is possible to cut the maintenance cost of the water filling equipment, and thus to reduce the costs required for the abandonment procedure considerably.
   Furthermore, even in a case where the removal and decommissioning work for the reactor internal structure is performed in an earlier stage than in a typical schedule, the efficiency of the entire abandonment procedure is not deteriorated.
   The removal and decommissioning work for the reactor internal structure and the removal work for the fuel are independent from each other, and thus can be performed at the same time.
(2) In some embodiments, in the above method (1), in a state where the water is stored in the work pool and the fuel storage pool being in communication with the work pool, the fuel is removed from the reactor vessel and the fuel is transported to the fuel storage pool under the water, and the reactor internal structure is taken out from the reactor vessel and decommissioned under the water.
   In a case where the fuel storage pool is in communication with the work pool, water in the work pool and the fuel storage pool can be drained only when removal of the fuel is completed and the removal and decommissioning work for the reactor internal structure is completed.
   Thus, in the above method (2), the removal and decommissioning work for the reactor internal structure is started before completing removal of the fuel from the fuel storage pool as described in the above (1), which makes it possible to end use of the work pool and the fuel storage pool in an earlier stage, and thereby it is possible to drain water from the pools in an earlier stage. Accordingly, it is possible to reduce the maintenance cost of the water filling equipment even further.
   Furthermore, according to the above method (2), in a state where water is stored in the work pool and the fuel storage pool, removal of the fuel from the reactor vessel and conveyance of the fuel to the fuel storage pool are both performed under water, and removal of the reactor internal structure from the reactor vessel and decommission of the same are performed under water. Thus, it is possible to perform the fuel removal step and the decommissioning step of the reactor internal structure efficiently.
(3) In some embodiments, in the above method (1) or (2), the method further comprises a step of accommodating, in a shielding container, the reactor internal structure after decommission, carried out from the work pool, and storing the reactor internal structure in a dry-type temporary storage facility.
   According to the above method (3), the reactor internal structure after decommission is accommodated in the shielding container and stored in a temporary storage facility, and thereby it is possible to temporarily store the high-dose reactor internal structure safely, until the reactor internal structure is transported to a disposal site for radioactive matters.
(4) In an embodiment, in the above method (3), the temporary storage facility is disposed outside the reactor vessel and the work pool, and inside a containment for containing the reactor vessel.
   According to the above method (4), with the temporary storage facility disposed inside the containment, it is possible to shorten the construction period of the temporary storage facility, and to perform the removal and decommissioning work for the reactor internal structure even earlier. Accordingly, it is possible to reduce the maintenance cost of the water filling equipment.
(5) In some embodiments, in the above method (3) or (4), the method further comprises a step of constructing the temporary storage facility. The step of taking out and decommissioning the reactor internal structure is started before completion of construction of the temporary storage facility.
   According to the above method (5), with the removal and decommissioning work for the reactor internal structure being started before completion of construction of the temporary storage facility, it is possible to perform the removal and decommissioning work for the reactor internal structure even earlier. Accordingly, it is possible to reduce the maintenance cost of the water filling equipment even further.
(6) In some embodiments, in any one of the above methods (1) to (5), the method further comprises a step of decommissioning an apparatus other than a reactor, disposed in a containment of the nuclear power plant. The step of taking out and decommissioning the reactor internal structure is started before starting decommission of the apparatus.
(7) In an embodiment, in the above method (6), the step of taking out and decommissioning the reactor internal structure is completed before starting decommission of the apparatus.
(8) In some embodiments, in the above method (6) or (7), the apparatus includes at least one of a steam generator, a pressurizer, a recirculation pump, or a containment spray, of the nuclear power plant.

According to the above methods (6) to (8), it is possible to perform the removal and decommissioning work for the reactor internal structure even earlier, and thereby it is possible to reduce the maintenance costs of the water filling equipment even further.

### Advantageous Effects

According to at least some embodiments of the present invention, by performing the step of decommissioning the reactor internal structure in a relatively early stage of the schedule, it is possible to drain the water from the work pool in an early stage. By draining the water from the work pool early, it is possible to cut the maintenance cost of the water filling equipment, and thus to reduce the costs required for the abandonment procedure considerably.

Furthermore, even in a case where the removal and decommissioning work for the reactor internal structure is performed earlier than in a typical schedule, the efficiency of the entire abandonment procedure is not deteriorated.

### BRIEF DESCRIPTION OF DRAWINGS

FIG. 1 is a schematic configuration diagram of a nuclear power plant according to an embodiment.
FIG. 2 is a cross-sectional view of a reactor according to an embodiment.
FIG. 3 is a schematic configuration diagram showing a reactor containment and its surrounding facilities according to an embodiment.
FIG. 4 is a flowchart showing a method for decommission of a nuclear power plant according to an embodiment.
FIG. 5 is a diagram showing a schedule of an abandonment procedure of a nuclear power plant according to an embodiment.
FIG. 6 is a diagram showing a schedule of an abandonment procedure of a nuclear power plant according to a typical example.

### DETAILED DESCRIPTION

Embodiments of the present invention will now be described in detail with reference to the accompanying drawings. It is intended, however, that unless particularly specified, dimensions, materials, shapes, relative positions and the like of components described in the embodiments shall be interpreted as illustrative only and not intended to limit the scope of the present invention.

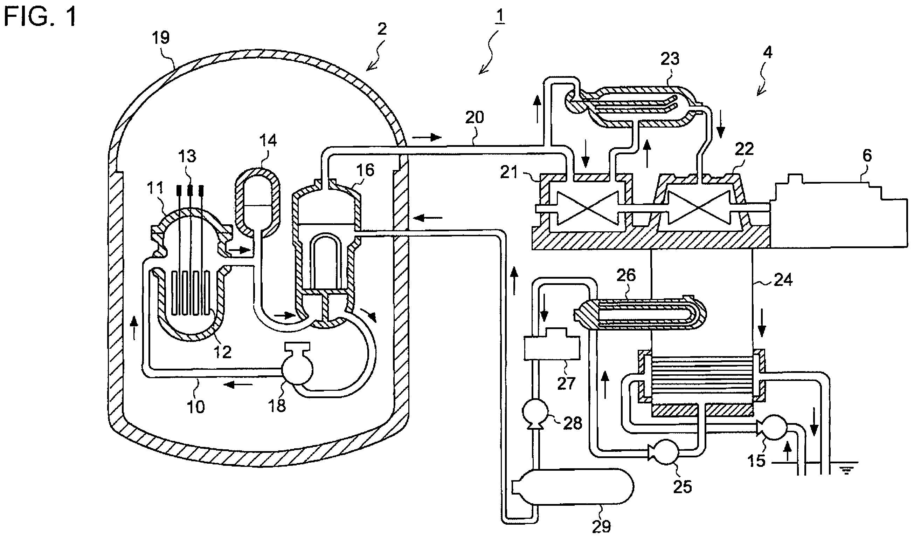

FIG. 1 is a schematic configuration diagram of a nuclear power plant 1 according to an embodiment. As shown in FIG. 1, the nuclear power plant 1 includes a reactor 2 for producing steam from thermal energy generated through fission reaction, a steam turbine 4 driven by steam produced in the reactor 2, and a generator 6 driven by rotation of a rotational shaft of the steam turbine 4. The reactor 2 shown in FIG. 1 is a pressurized water reactor (PWR). In another embodiment, the reactor 2 may be a boiling water reactor (BWR), or a reactor of a type that uses a matter other than light water as a moderator or a coolant, unlike light water reactors that include PWRs and BWRs for instance.

The reactor 2 includes a primary cooling loop through which primary cooling water (primary coolant) flows, a reactor vessel (pressure vessel) 11 disposed in the primary cooling loop 10, a pressurizer 14, a steam generator 16, and a primary coolant pump 18. The primary coolant pump 18 is configured to circulate primary coolant water through the primary cooling loop 10. The pressurizer 14 is configured to pressurize primary coolant water so that the primary coolant water does not boil in the primary cooling loop 10. The reactor vessel 11, the pressurizer 14, the steam generator 16, and the primary coolant pump 18, which constitute the reactor 2, are housed in a reactor containment 19 (hereinafter, merely referred to as containment).

The reactor vessel 11 contains fuel rods 12 containing pellet-like nuclear fuel (e.g. uranium fuel, MOX fuel), and thermal energy generated through fission reaction of the nuclear fuel heats the primary cooling water inside the reactor vessel 11. To control the reactor output, the reactor vessel 11 is provided with control rods 13 for absorbing neutrons generated in a reactor core including nuclear fuel, and moderating the same. Further, the primary cooling water heated in the reactor vessel 11 is sent to the steam generator 16, and heats secondary cooling water (secondary coolant) that flows through the secondary cooling loop 20 through heat exchange to generate steam.

The steam generated in the steam generator 16 is sent to the steam turbine 4 including a high-pressure turbine 21 and a low-pressure turbine 22, and rotary drives the steam turbine 4. Further, the steam turbine 4 is coupled to the generator 6 via a rotational shaft, and the generator 6 is driven by rotation of the rotational shaft, thereby generating electric energy. Moreover, a moisture separation heater 23 is disposed between the high-pressure turbine 21 and the low-pressure turbine 22, and is configured to re-heat steam after performing work in the high-pressure turbine 21 and then send the steam to the low-pressure turbine 22.

The secondary cooling loop 20 is provided with a condenser 24, a low-pressure supply water heater 26, a deaerator 27, and a high-pressure supply water heater 29. After performing work in the low-pressure turbine 22, steam passes through the above devices while being condensed and heated, before returning to the steam generator 16. The secondary cooling loop 20 is provided with a condensing pump 25 and a water supply pump 28, which circulate the secondary cooling water through the secondary cooling loop 20. Furthermore, via a pump 15, the condenser 24 is supplied with cooling water (e.g. sea water) for cooling steam from the low-pressure turbine 22 through heat exchange.

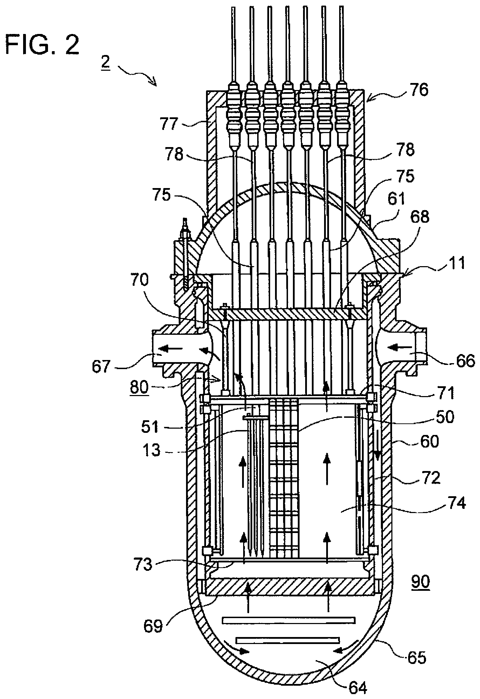

Next, with reference to FIG. 2, a specific configuration of the reactor 2 (mainly, the reactor vessel 11 and the reactor internal structure 80) according to some embodiments will be described. FIG. 2 is a cross-sectional view of the reactor 2 according to an embodiment. In FIG. 2, arrows indicate the flow of coolant.

As shown in FIG. 2 as an example, the reactor 2 according to some embodiments includes the reactor vessel 11 and the reactor internal structure 80.

The reactor internal structure 80 includes, for instance, structural bodies with a function to determine the position of a fuel assembly 50 or to support the same, structural bodies with a function to guide the control rods 13 or to determine position of the same, or structural bodies for forming a coolant flow passage inside the reactor vessel 11. The reactor internal structure 80 may be also referred to as internals. For instance, in the embodiment shown in FIG. 2, the reactor internal structure 80 includes an upper core support plate 68, a lower core support plate 69, core support rods 70, an upper core plate 71, a core shroud 72, a lower core plate 73, or control-rod cluster guide tubes 75.

In another embodiment, in a case where the reactor 2 is a BWR-type reactor, the internals (reactor internal structure) includes a structural body having a function to remove moisture from steam.

The reactor vessel 11 includes a reactor vessel body 60 and a reactor vessel lid 61 that can be opened and closed.

The reactor vessel body 60 has a cylindrical shape closed by a lower lid 65 whose lower part has a semi-sphere shape. Furthermore, the reactor vessel body 60 is provided with a coolant inlet portion (inlet nozzle) 66 for supplying light water (coolant) as the primary coolant water and a coolant outlet portion (outlet nozzle) for discharging light water, formed on the upper section of the reactor vessel body 60. Furthermore, besides the coolant inlet portion 66 and the coolant outlet portion 67, the reactor vessel body 60 is provided with a water injection nozzle formed thereon (not shown).

Inside the reactor vessel body 60, the upper core support plate 68 is fixed to a position above the coolant inlet portion 66 and the coolant outlet portion 67, and the lower core support plate 69 is fixed to a position in the vicinity of the lower lid 65 below the same. The upper core support plate 68 and the lower core support plate 69 have a disc shape, and a plurality of through holes (not shown) are formed thereon. Further, the upper core plate 71 having a plurality of through holes (not shown) formed thereon is coupled below the upper core support plate 68, via the plurality of core support rods 70.

Inside the reactor vessel body 60, the core shroud 72 having a cylindrical shape is arranged to have a predetermined interval from the inner wall surface of the reactor vessel body 60. The core shroud 72 has an upper section coupled to the upper core plate 71 and a lower section coupled to the lower core plate 73. The lower core plate 73 has a disc shape with a plurality of through holes (not shown) formed thereon, and is supported on the lower core support plate 69.

The core 74 is formed by the upper core plate 71, the core shroud 72, and the lower core plate 73.

Inside the core 74, a plurality of fuel assemblies 50 and a plurality of control rods 13 are arranged. The plurality of control rods 13 have upper end portions which collectively form the control-rod clusters 51, and are insertable into the fuel assemblies 50. The plurality of control-rod cluster guide tubes 75 are fixed to the upper core support plate 68 so as to penetrate through the upper core support plate 68. Each of the control-rod cluster guide tubes 75 has a lower end portion protruding into corresponding one of the control-rod clusters 51 inside the fuel assemblies 50.

The fuel assemblies 50 are supported on a support plate (not shown), with a plurality of fuel rods arranged in a grid pattern. Fission reaction of the plurality of fuel rods included in the fuel assemblies 50 is controlled by the control-rod clusters 51 having the plurality of control rods 13. The control-rod clusters 51 are driven by a control rod drive mechanism 76, such that the plurality of control rods 13 of the control-rod clusters 51 move up and down inside the fuel assemblies 50.

The reactor vessel lid 61 of the reactor vessel 11 has an upper section having a semi-sphere shape and includes the control rod drive mechanism 76 comprising a magnetic jack, which is housed inside a housing 77 that is provided integrally with the reactor vessel lid 61. The plurality of control-rod cluster guide tubes 75 have upper end portions protruding to the control rod drive mechanism 76. The control rod drive mechanism 76 has control-rod cluster drive shafts 78 protruding through the control-rod cluster guide tubes 75 to reach the fuel assemblies 50 so as to be capable of holding the control-rod clusters 51. The control rod drive mechanism 76 extends in the vertical direction and is coupled to the control-rod clusters 51, and moves the control-rod cluster drive shafts 78 up and down to control the output of the reactor 2.

In the reactor 2 having the above configuration, the control rod drive mechanism 76 moves the control-rod cluster drive shafts 78 such that the control rods 13 are pulled out from the fuel assemblies 50 by a predetermined amount, and thereby fission inside the core 74 is controlled, where generated thermal energy heats light water filled inside the reactor vessel 11, and high-temperature light water is discharged from the coolant outlet portion 67 to be sent to the steam generator 16 as described above. That is, neutrons are released in fission of nuclear fuel constituting the fuel assemblies 50, and light water serving as moderator and the primary cooling water reduces the kinetic energy of the released high-speed neutrons to turn the same into thermal neutrons, thereby making it more likely for another fission to happen, and taking away generated heat to cool. Furthermore, the control rods 13 are inserted into the fuel assemblies 50, and thereby the number of neutrons generated in the core 74 is moderated. It is also possible to stop the reactor immediately by inserting all of the control rods 13 into the fuel assemblies 50.

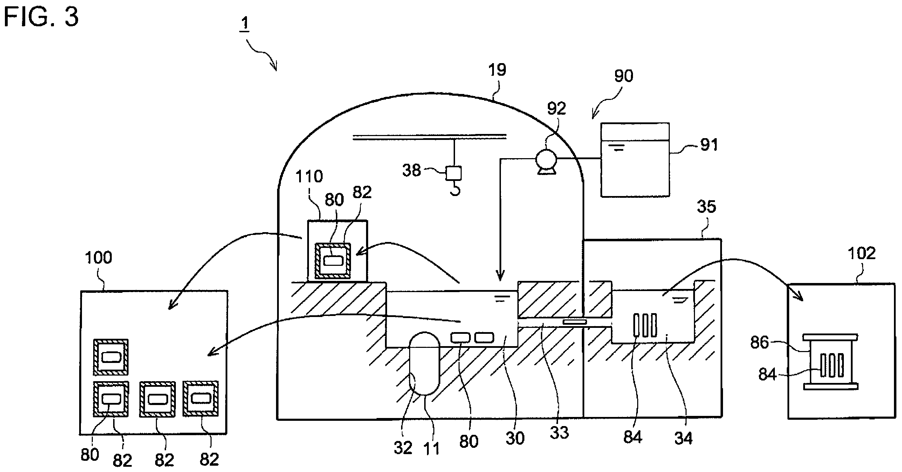

Next, with reference to FIG. 3, the containment 19 and temporary storage facilities 100, 102, 110 will be described. FIG. 3 is a schematic configuration diagram showing the containment 19 and its surrounding facilities according to an embodiment.

In an embodiment, the containment 19 includes a work pool (pit) 30 for decommissioning the reactor internal structure 80 taken out from the reactor vessel 11, and a conveyance mechanism 38 including a crane and a hoist disposed above the containment 19.

A reactor vessel housing space 32 is formed below the work pool 30, and has an opening on the bottom surface of the work pool 30. The reactor vessel housing space 32 is configured to be capable of housing most part of the reactor vessel 11. That is, in a state where the reactor vessel 11 is housed in the reactor vessel housing space 32, only an upper portion (reactor vessel lid 61; see FIG. 2) of the reactor vessel 11 is positioned inside the work pool 30. The work pool 30 has a decommission space for decommissioning the reactor internal structure 80.

Furthermore, the work pool 30 is in communication with a fuel storage pool 34 via a conveyance passage 33. The conveyance passage 33 is a flow passage for conveying, to the fuel storage pool 34, expended fuel (hereinafter, merely referred to as fuel) 84 taken out from the reactor vessel 11 to the work pool 30 temporarily. The conveyance passage 33 may be configured to be openable and closeable.

The fuel storage pool 34 may be disposed inside an auxiliary building 35 next to the containment 19. The conveyance passage 33 is disposed across the containment 19 and the auxiliary building 35.

The work pool 30 or the fuel storage pool 34 is supplied with water by water filling equipment 90. For instance, the water filling equipment includes a reservoir tank 91 (e.g. fuel replacing water tank) and a pump 92 for feeding water in the reservoir tank 91 to the work pool 30 or the fuel storage pool 34.

Furthermore, the nuclear power plant 1 may include dry-type temporary storage facilities 100, 102 disposed outside the containment 19. For instance, the temporary storage facility for waste (waste building) 100 is a facility for temporarily storing the reactor internal structure 80 after decommission, in a state of being housed in a shielding container 82. The fuel temporary storage facility (fuel building) 102 is a facility for temporarily storing the fuel 84 accommodated in a dry cask 86.

Furthermore, the nuclear power plant 1 may include a dry-type temporary storage facility (waste temporary storage facility) 110 disposed inside the containment 19. Inside the containment 19, the temporary storage facility (waste temporary storage facility) 110 is disposed in an area excluding the work pool 30. The temporary storage facility 110 is a facility for temporarily storing the reactor internal structure 80 after decommission, in a state of being housed in the shielding container 82. The temporary storage facility 110 is disposed inside the containment 19, and thus may have a simpler configuration than the temporary storage facility (waste temporary storage facility) 100 disposed outside the containment 19.

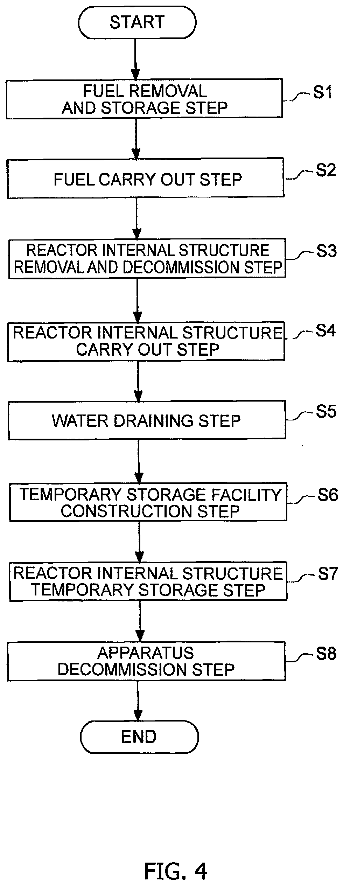

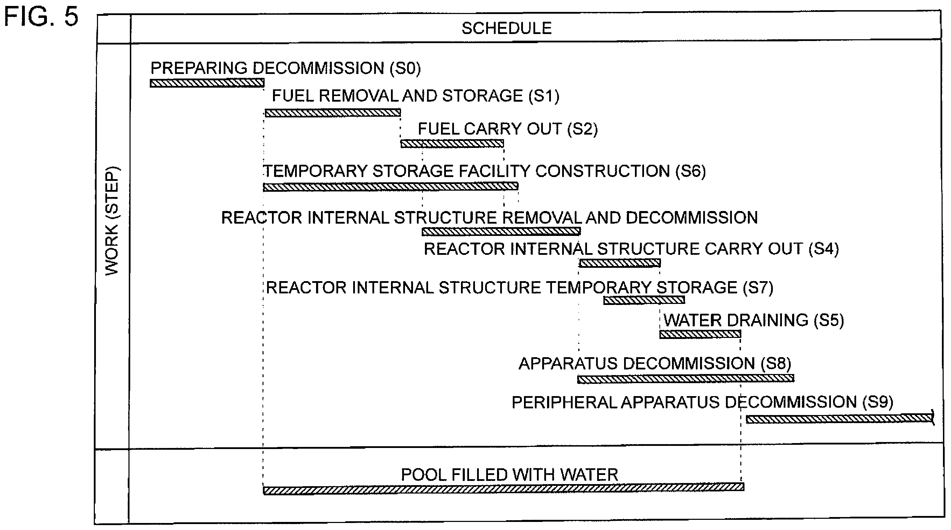

Next, with reference to FIGs. 4 and 5, a method for decommission of the nuclear power plant 1 according to some embodiments will be described.

FIG. 4 is a flowchart showing a method for decommission of the nuclear power plant 1 according to an embodiment. FIG. 5 is a diagram showing a schedule of an abandonment procedure of a nuclear power plant according to an embodiment, partially corresponding to the flowchart of FIG. 4. While the steps are merely placed next to one another in the flowchart shown in FIG. 4, the starting point or the ending point of each step may overlap with that of another step, as in the schedule diagram shown in FIG. 5.

In the following description, the reference signs used to describe FIGs. 1 to 3 are used again where appropriate.

As shown in FIGs. 4 and 5, in some embodiments, the method for decommission of the nuclear power plant 1 includes a step S1of removing the fuel 84 from the reactor vessel 11 and storing the fuel 84 in the fuel storage pool 34, a step S2 of carrying the fuel out from the fuel storage pool 34, a step S3 of taking out the reactor internal structure 80 inside the reactor vessel 11 to the work pool 30 after removing the fuel 84 from the reactor vessel 11, and decommissioning the reactor internal structure under the water stored in the work pool 30, a step S4 of carrying the decommissioned reactor internal structure out from the work pool, and a step S5 of draining water from the work pool 30 after carrying the reactor internal structure 80 out from the work pool.

Furthermore, in the above method for decommission of the nuclear power plant 1, the removal and decommissioning work for the reactor internal structure 80 is started before completing removal of the fuel 84 from the fuel storage pool 34.

In the above embodiment, the removal and decommissioning work for the reactor internal structure 80 is started before completing removal of the fuel 84 from the fuel storage pool 34. By performing the step of decommissioning the reactor internal structure 80 in a relatively early stage of the abandonment procedure schedule of the nuclear power plant 1, it is possible to drain the water in the work pool 30 in an early stage. By draining the water from the work pool 30 in an early stage, it is possible to cut the maintenance cost of the water filling equipment 90, and thus to reduce the costs required for the abandonment procedure considerably. Herein, the maintenance cost for the water filling equipment 90 includes the maintenance cost for the pump 92 and the like, for instance.

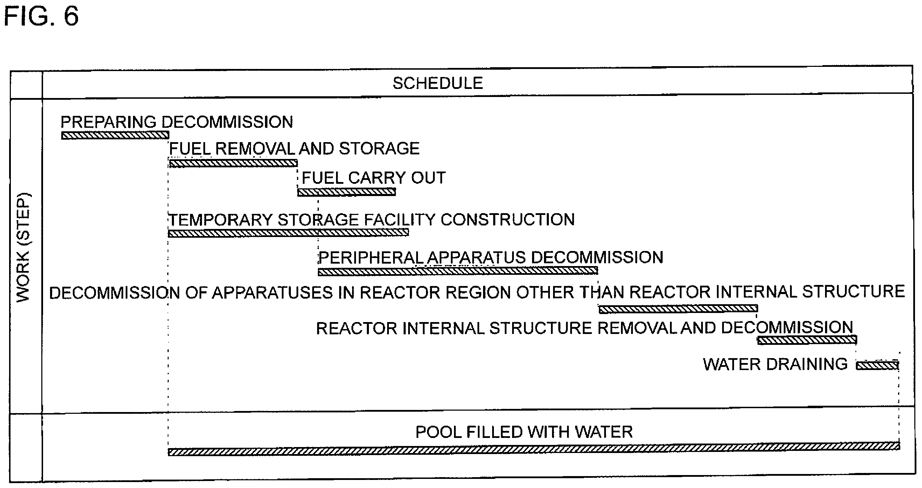

Furthermore, even in a case where the removal and decommissioning work for the reactor internal structure 80 is performed in an earlier stage than in a typical abandonment procedure schedule (see FIG. 6), the efficiency of the entire abandonment procedure is not deteriorated.

The removal and decommissioning work for the reactor internal structure 80 and the removal work for the fuel 84 are independent from each other, and thus can be performed at the same time.

The step S3 of taking out and decommissioning the reactor internal structure may be performed in the first half of the entire schedule period of the abandonment procedure schedule (schedule diagram).

In an embodiment, in a state where water is stored in the work pool 30 and the fuel storage pool 34 being in communication with the work pool 30, removal of the fuel 84 from the reactor vessel 11 and conveyance of the fuel 84 to the fuel storage pool 34 are both performed under water, and removal of the reactor internal structure 80 from the reactor vessel 11 and decommission of the same are performed under water.

In a case where the fuel storage pool 34 is in communication with the work pool 30, water in the work pool 30 and the fuel storage pool 34 can be drained only when removal of the fuel 84 is completed and the removal and decommissioning work for the reactor internal structure 80 is completed.

Thus, in the above embodiment, the removal and decommissioning work for the reactor internal structure 80 is started before completing removal of the fuel 84 from the fuel storage pool 34, which makes it possible to end use of the work pool 30 and the fuel storage pool 34 in an earlier stage, and thereby it is possible to drain water from the pools 30, 34 early. Accordingly, it is possible to reduce the maintenance cost of the water filling equipment 90 even further.

Furthermore, in an embodiment, in a state where water is stored in the work pool 30 and the fuel storage pool 34, removal of the fuel 84 from the reactor vessel 11 and conveyance of the fuel 84 to the fuel storage pool 34 are both performed under water, and removal of the reactor internal structure 80 from the reactor vessel 11 and decommission of the same are performed under water. Thus, it is possible to perform the fuel removal step S1 and the decommissioning step S3 of the reactor internal structure 80 efficiently.

In an embodiment, the method further includes a step S7 of accommodating the reactor internal structure 80 after decommission, carried out from the work pool 30, into the shielding container 82, and storing the reactor internal structure 80 in the dry-type temporary storage facilities (waste temporary facilities) 100, 110.

Accordingly, the reactor internal structure 80 after decommission is accommodated in the shielding container 82 and stored in the temporary storage facilities 100, 110, and thereby it is possible to temporarily store the high-dose reactor internal structure 80 safely, until the reactor internal structure 80 is transported to a disposal site for radioactive matters.

In an embodiment, the temporary storage facility 110 is disposed outside the reactor vessel 11 and the work pool 30, and inside the containment 19 for housing the reactor vessel 11.

Accordingly, with the temporary storage facility 110 disposed inside the containment 19, it is possible to shorten the construction period of the temporary storage facility 110, and to perform the removal and decommissioning work for the reactor internal structure 80 even earlier. Accordingly, it is possible to reduce the maintenance cost of the water filling equipment 90.

In this case, the temporary storage facility 110 inside the containment 19 only needs to be capable of storing at least a part of the shielding container 82 housing the reactor internal structure 80 after decommission . In this case, the temporary storage facility 110 may store the shielding container 82 housing the reactor internal structure 80 after decommission, until the temporary storage facility 100 outside the containment 19 is completed. Accordingly, it is possible to make use of the limited space inside the containment 19, and to decommission the reactor internal structure 80 in an earlier stage.

In an embodiment, the method for decommission of the nuclear power plant 1 further includes a step S6 of building a temporary storage facility. In this case, the removal and decommissioning work for the reactor internal structure 80 starts before construction of the temporary storage facility (waste temporary storage facility) 110 is completed.

Accordingly, with the temporary the removal and decommissioning work for the reactor internal structure 80 being started before completion of construction of the temporary storage facility 100, it is possible to perform the removal and decommissioning work for the reactor internal structure 80 even earlier. Accordingly, it is possible to reduce the maintenance cost of the water filling equipment even further.

In some embodiments, the method for decommission of the nuclear power plant 1 further includes a step S8 of decommissioning apparatuses other than the reactor 2 inside the containment 19 of the nuclear power plant 1, and the removal and decommissioning work for the reactor internal structure 80 is started before starting decommission of the above apparatuses.

In this case, the removal and decommissioning work for the reactor internal structure 80 may be completed before starting decommission of the apparatuses.

The apparatuses other than the reactor 2 inside the containment 9 include at least one of the steam generator, the pressurizer, the recirculation pump (if the reactor 2 is a BWR reactor), or a containment spray, of the nuclear power plant 1.

According to the above methods, it is possible to perform the removal and decommissioning work for the reactor internal structure 80 even earlier, and to reduce the maintenance cost of the water filling equipment 90 even further.

Furthermore, the method for decommission of the nuclear power plant 1 may include a peripheral-apparatus decommissioning step S9 of decommissioning peripheral apparatuses excluding the reactor region, after completion of the reactor internal structure removal and decommissioning step S3.

Alternatively, the method for decommission of the nuclear power plant 1 may include a peripheral-apparatus decommissioning step S9 of decommissioning peripheral apparatuses excluding the reactor region, after completion of steps S3 and S8 of decommissioning apparatuses in the reactor region (the reactor internal structure 80 and apparatuses other than the reactor 2 inside the containment 19).

Furthermore, the method may include a decommission work preparation step SO of preparing for all of the decommissioning works before the above described steps S1 to S8.

As described above, according to at least some embodiments of the present invention, by performing the step of decommissioning the reactor internal structure 80 in a relatively early stage of the schedule, it is possible to drain the water from the work pool 30 early. By draining the water in the work pool 30 in an early stage as described above, it is possible to cut the maintenance cost of the water filling equipment 90, and thus to reduce the costs required for the abandonment procedure considerably.

FIG. 6 is a diagram showing a schedule diagram of the abandonment procedure of the nuclear power plant according to a typical example. In the typical schedule diagram shown in FIG. 6, decommission of the peripheral apparatuses is started after performing removal and storage of the fuel and discharge of the fuel. Then, after decommissioning the peripheral apparatuses, the apparatuses other than the reactor internal structure in the reactor region (e.g. steam generator) are decommissioned, and then the reactor internal structure is removed and decommissioned. Thus, the pool is filled with water for the most of the period of the schedule diagram (abandonment procedure schedule), which leads to an increase in the maintenance cost of the water filling equipment.

In contrast, in the present embodiment shown in FIG. 5, by performing the reactor internal structure removing and decommissioning step S3 in an earlier stage, it is possible to shorten the period in which the pool is filled with water.

Furthermore, even in a case where the removal and decommissioning work for the reactor internal structure 80 is performed in an earlier stage than in a typical schedule, the efficiency of the entire abandonment procedure is not deteriorated.

Embodiments of the present invention were described in detail above, but the present invention is not limited thereto, and various amendments and modifications may be implemented.

For instance, while the reactor 2 shown in FIG. 1 is a pressurized water reactor, the reactor 2 may be a boiling water reactor in another embodiment.

Furthermore, while the nuclear power plant 1 shown in FIG. 1 is a nuclear power plant for performing power generation, the nuclear power plant may be configured to generate energy other than electric power, such as motoring power.

For instance, an expression of relative or absolute arrangement such as "in a direction", "along a direction", "parallel", "orthogonal", "centered", "concentric" and "coaxial" shall not be construed as indicating only the arrangement in a strict literal sense, but also includes a state where the arrangement is relatively displaced by a tolerance, or by an angle or a distance whereby it is possible to achieve the same function.

For instance, an expression of an equal state such as "same" "equal" and "uniform" shall not be construed as indicating only the state in which the feature is strictly equal, but also includes a state in which there is a tolerance or a difference that can still achieve the same function.

Further, for instance, an expression of a shape such as a rectangular shape or a cylindrical shape shall not be construed as only the geometrically strict shape, but also includes a shape with unevenness or chamfered corners within the range in which the same effect can be achieved.

On the other hand, an expression such as "comprise", "include", "have", "contain" and "constitute" are not intended to be exclusive of other components.

### Description of Reference Numerals

- 1: Nuclear power plant
- 2: Reactor
- 4: Steam turbine
- 6: Generator
- 10: Primary cooling loop
- 11: Reactor vessel
- 12: Fuel rod
- 13: Control rod
- 16: Steam generator
- 18: Primary coolant pump
- 19: Containment
- 20: Secondary cooling loop
- 30: Work pool
- 30A: Decommission space
- 32: Reactor vessel housing space
- 33: Conveyance passage
- 34: Fuel storage pool
- 35: Auxiliary building
- 38: Conveyance mechanism
- 50: Fuel assembly
- 60: Reactor vessel body
- 80: Reactor internal structure
- 82: Shielding container
- 84: Fuel
- 86: Dry cask
- 90: Water filling facility
- 91: Reservoir tank
- 92: Pump
- 100: Temporary storage facility (waste temporary storage facility)
- 102: Fuel temporary storage facility (waste temporary storage facility)

## Claims

1. A method for decommission of a nuclear power plant, comprising:
a step of removing fuel from a reactor vessel and storing the fuel in a fuel storage pool;
a step of carrying the fuel out from the fuel storage pool;
a step of, after removing the fuel from the reactor vessel, taking a reactor internal structure inside the reactor vessel out to a work pool storing water and being positioned above the reactor vessel, and decommissioning the reactor internal structure under the water stored in the work pool;
a step of carrying the decommissioned reactor internal structure out from the work pool; and
a step of, after carrying the reactor internal structure out from the work pool, draining the water from the work pool,
wherein the step of taking out and decommissioning the reactor internal structure is started before completion of carrying out of the fuel from the fuel storage pool.

2. The method for decommission of a nuclear power plant according to claim 1,
wherein, in a state where the water is stored in the work pool and the fuel storage pool being in communication with the work pool, the fuel is removed from the reactor vessel and the fuel is transported to the fuel storage pool under the water, and the reactor internal structure is taken out from the reactor vessel and decommissioned under the water.

3. The method for decommission of a nuclear power plant according to claim 1 or 2, further comprising a step of accommodating, in a shielding container, the reactor internal structure after decommission, carried out from the work pool, and storing the reactor internal structure in a dry-type temporary storage facility.

4. The method for decommission of a nuclear power plant according to claim 3,
wherein the temporary storage facility is disposed outside the reactor vessel and the work pool, and inside a containment for containing the reactor vessel.

5. The method for decommission of a nuclear power plant according to claim 3 or 4, further comprising a step of constructing the temporary storage facility,
wherein the step of taking out and decommissioning the reactor internal structure is started before completion of construction of the temporary storage facility.

6. The method for decommission of a nuclear power plant according to any one of claims 1 to 5, further comprising a step of decommissioning an apparatus other than a reactor, disposed in a containment of the nuclear power plant,
wherein the step of taking out and decommissioning the reactor internal structure is started before starting decommission of the apparatus.

7. The method for decommission of a nuclear power plant according to claim 6,
wherein the step of taking out and decommissioning the reactor internal structure is completed before starting decommission of the apparatus.

8. The method for decommission of a nuclear power plant according to claim 6 or 7,
wherein the apparatus includes at least one of a steam generator, a pressurizer, a recirculation pump, or a containment spray, of the nuclear power plant.
